# EUROPEAN PATENT SPECIFICATION

(11) **EP 4 019 879 B1**
(45) Date of publication and mention of the grant of the patent: **28.08.2024**
(21) Application number: 21217891.7
(22) Date of filing: 28.12.2021
(51) Int. Cl.: F28F 3/04, F28D 9/00

(54) **HEAT EXCHANGER**
WÄRMETAUSCHER
ÉCHANGEUR DE CHALEUR

(30) Priority: 28.12.2020 CN 202011582385; 29.11.2021 CN 202111438607
(43) Date of publication of application: 29.06.2022
(73) Proprietor: Zhongshan Fortune Way Environmental Technology Co., Ltd., Zhongshan, Guangdong 528400 (CN)
(72) Inventor: WAN, Ziqian, ZHONGSHAN (CN); HUANG, Xi, ZHONGSHAN (CN); CHEN, Ximan, ZHONGSHAN (CN); LIU, Yang, ZHONGSHAN (CN)
(74) Representative: Sun, Yiming

(56) References cited:
- EP-A1- 2 908 080
- WO-A1-2013/093375
- FR-A1- 3 000 189
- JP-A- S63 140 295
- JP-B2- 4 021 048

## Description

### TECHNICAL FIELD

The present disclosure relates to a heat exchanger.

### BACKGROUND

With the rapid development of society, people enjoy higher living standards. However, at the same time, living environment has been severely damaged, which negatively affects air quality. An air purifier and a ventilation system have been developed to improve indoor air quality. The ventilation system brings fresh outdoor air into room through filtration and purification, and exhausts polluted indoor air to the outdoors, to complete effective of indoor and outdoor air, thereby keeping indoor air clean and comfortable.

JPS63140295A discloses a heat exchanger according to the preamble of claim 1.

However, a heat exchanger core of the conventional ventilation system has low heat exchange efficiency. In view of this problem, the present disclosure provides a novel technical solution.

### SUMMARY

A technical problem to be solved by the present disclosure is to provide a heat exchanger, which can improve heat exchange efficiency.

Another technical problem to be solved by the present disclosure is to provide a heat exchanger, which has a simple structure, thereby being easy to industrialize and controllable in costs.

In order to achieve the above technical effects, the present disclosure provides a heat exchanger, including:
A heat exchanger includes a plurality of adjacent sheets. The adjacent sheets extend parallel to one another along the same direction.

The adjacent sheets are connected to one other at least at a part of their peripheral edges or middle portions, and flow channels for fluid flow are formed between the adjacent sheets.

An upper surface of each sheet is provided with a plurality of raised peak lines that are arranged in parallel and spaced rows and raised upward, and a lower surface of each sheet is provided with a plurality of raised contour lines that are arranged in parallel and spaced rows and raised downward. The raised peak lines and the raised contour lines that are arranged in rows are both connected by continuous peaks and valleys.

Between adjacent three sheets, the peaks of the raised contour lines are located between two valleys of the raised peak lines, and the peaks of the raised contour lines and the two valleys of the raised peak lines are staggered, to form a first flow channel and a second flow channel. The fluid flows through the first flow channel along a first direction and a second direction, and the fluid flows through the second flow channel along the first direction and a third direction, so as to form a convection by the fluid flowing through the first flow channel and the second flow channel.

The first direction is arranged at an angle with respect to the second direction and the third direction, and the second direction and the third direction are parallel and opposite to each other.

Optionally, the fluid flows through the first flow channel along a first direction A, and the fluid flows through the second flow channel along a first direction B, the first direction A is opposite to the first direction B. At least two convections are formed by the fluid flowing through the first flow channel and the second flow channel.

According to the invention a trajectory formed by the fluid flowing along the first direction is a curve. The curve having alternating peaks and valleys.

A trajectory formed by the fluid flowing along the second direction or the third direction is a straight line. The second direction and the third direction being parallel and opposite to each other.

A horizontal angle between the first direction and the second direction, and between the first direction and the third direction is α, and α is ranged from 30° to 90°.

Optionally, the trajectory formed by the fluid flowing along the first direction is a triangle wave. The triangle wave has alternating triangular peaks and triangular valleys.

The first direction is perpendicular to the second direction and the third direction.

Optionally, the peaks of the raised contour lines extend into the valleys each between two raised peak lines, and the peaks of the raised peak lines extend into the valleys each between two raised contour lines. The raised contour lines are parallel to the raised peak lines.

Optionally, a distance between the raised contour lines and the raised peak lines is d, and d is ranged from 0.5 mm to 5 mm.

A distance between adjacent two peaks of the raised contour lines is L, and L is ranged from 2 mm to 100 mm.

A vertical distance between the peaks of the raised contour lines and the valleys of the raised contour lines is H, and H satisfies (H*H)/(L*L)≥0.75.

An angle of the peaks of the raised contour lines is δ1, and an angle of the valleys of the raised peak lines is δ2, δ1≥20.5°, and δ2≥20.5°.

Optionally, d is ranged from 1 mm to 3mm, L is ranged from 3 mm to 50 mm, H satisfies 1.25≤(H*H)/(L*L)≤6.6, 22°≤δ1≤60°, and 22°≤δ2≤60°.

Optionally, the peaks of the raised contour lines extend into the valleys each between two raised peak lines, and the peaks of the raised peak lines extend into the valleys each between two raised contour lines. An extension length is a quarter to two-thirds of a depth of the valleys.

Peak tops of the raised contour lines are located on center lines of the valleys each between two raised peak lines, and peak tops of the raised peak lines are located on center lines of the valleys each between two raised contour lines.

Optionally, the sheets are provided with a plurality of raised guiding strips on two sides of the raised peak lines arranged in rows. Inner ends of the raised guiding strips are joined to ends of the raised peak lines, outer edges of the sheets that are located at outer ends of the raised guiding strips are provided with openings, and the remaining outer edges of the sheets are provided with ribs.

Optionally, the raised guiding strips are arranged at an included angle β with the second direction or the third direction, and 0°<β<90°.

Optionally, the raised guiding strips of the adjacent sheets are arranged at an included angle γ, and 0°<γ<180°.

Optionally, the sheets each have a microporous structure, and a pore diameter of a micropore is ranged from 0.01 µm to 0.3 µm.

Optionally, the sheets each are provided with at least one layer of polymer composite coating, the polymer composite coating having selective permeability to water molecules.

Compared with the related art, the present disclosure has the following beneficial effects.

In the present disclosure, the plurality of sheets are stacked and connected adjacently to form the heat exchanger. A flow channel is formed between adjacent two sheets. Specifically, a plurality of flow channels are formed between the raised peak lines arranged in rows and the raised contour lines arranged in rows, and fluid (airflow) flows through the flow channels formed between the raised peak lines and the raised contour lines. An upper sheet and a lower sheet are arranged in staggered and parallel fashion. After being stacked, the raised contour lines of the upper sheet are staggered with respect to the raised peak lines of the lower sheet. The peaks of the raised contour lines extend downward to the valleys of the raised peak lines, and the peaks of the raised peak lines extend upward to the valleys of the raised contour lines.

The two sides of the peaks of the raised contour lines and the two sides of the valleys of the raised peak lines form the two-side gap. The fluid flows along the bottom of the valleys of the raised contour lines, the bottom of the valleys of the raised peak lines, and the two-side gap, which greatly enhances the heat exchange area of the fluid, thereby improving the heat exchange efficiency.

Between adjacent three sheets, the first flow channel and the second flow channel are formed by the paths between the peaks and valleys. Each first flow and second flow channel are bypass. The fluid flows through the first flow channel along a first direction and a second direction, and the fluid flows through the second flow channel along the first direction and a third direction. During a heat exchange process, two airflows realize the convective heat transfer and mass transfer by the middle sheets. The first airflow flows through the first flow channel in the second direction, and the second airflow flows through the second flow channel in the third direction. The second direction and the third direction are parallel and opposite, so as to form a convection in the direction perpendicular to the paper surface. At the same time, the first airflow and the second airflow also meander forward through the gaps formed between the raised contour lines and the raised peak lines. The first airflow meanders forward in the first flow channel along the first direction A, and the second air flow meanders forward in the second flow channel along the first direction B. The first direction A and the first direction B are opposite, so as to form another convection in the horizontal direction.

Thus, the present disclosure, by the plurality of airflows passing through the middle sheets, realizes convection heat transfer and mass transfer. In this way, the airflow velocity distribution is more uniform; and in addition, the airflow velocity is reduced and the resistance of the airflow passing through the flow channels is reduced, thereby improving heat exchange efficiency.

Moreover, the present disclosure has a simple structure, thereby being easy to industrialize and controllable in costs.

### BRIEF DESCRIPTION OF THE DRAWINGS

FIG. 1 is a perspective view of a heat exchanger according to the present disclosure.
FIG. 2 is a first schematic diagram of an exploded structure of a heat exchanger according to the present disclosure.
FIG. 3 is a second schematic diagram of an exploded structure of a heat exchanger according to the present disclosure.
FIG. 4 is a sectional view of a heat exchanger according to the present disclosure.
FIG. 5 is a partial enlargement view of portion A shown in FIG. 4.
FIG. 6 is a first perspective view of sheets according to the present disclosure.
FIG. 7 is a second perspective view of sheets according to the present disclosure.
FIG. 8 is a front view of sheets according to the present disclosure.
FIG. 9 is a schematic view of a cross section between adjacent sheets according to an embodiment.
FIG. 10 is a schematic diagram of the flow channel shown in FIG. 9.
FIG. 11 is a schematic diagram of a maximum speed change in a flow channel according to the present disclosure.
FIG. 12 is a schematic diagram of a speed change at a flow channel center according to the present disclosure.
FIG. 13 is a diagram of velocity distribution of a flow field according to a first embodiment according to the present disclosure.
FIG. 14 is a diagram of velocity distribution of a flow field according to a second embodiment of the present disclosure.
FIG. 15 is a diagram of velocity distribution of a flow field according to a third embodiment of the present disclosure.
FIG. 16 is a diagram of velocity distribution of a flow field according to a fourth embodiment of the present disclosure.
FIG. 17 is a diagram of velocity distribution of a flow field according to a fifth embodiment of the present disclosure.

### DETAILED DESCRIPTION

To make the objective, technical solutions, and advantages of the present disclosure clearer, the technical solutions of the present disclosure are clearly and completely described below with reference to the specific examples and corresponding accompanying drawings of the present disclosure.

The orientations shown in the figures should not be construed as limiting the specific protection scope of the present disclosure, and is only for reference and understanding of preferred embodiments. The product components shown in the figures may be changed in position or increased in number or simplified in structure.

The "connection" described in the specification and the mutual "connection" relationship between components shown in the figures may be understood as a fixed connection or a detachable connection or an integral connection; or a direct connection or an indirect connection via an intermediate medium. A person of ordinary skill in the art can understand the connection relationship according to a specific situation, and use a screw connection, a riveted connection, a welded connection, a snap connection, or an embedded connection, etc. to perform different implementation alternatives in an appropriate manner.

For the orientation terms such as up, down, left, right, top, bottom mentioned in the specification and the orientations shown in the figures, each part may be in contact directly or by other features. For example, above may refer to being directly above and diagonally above, or simply mean being higher than another object. This is applied similarly to other orientations.

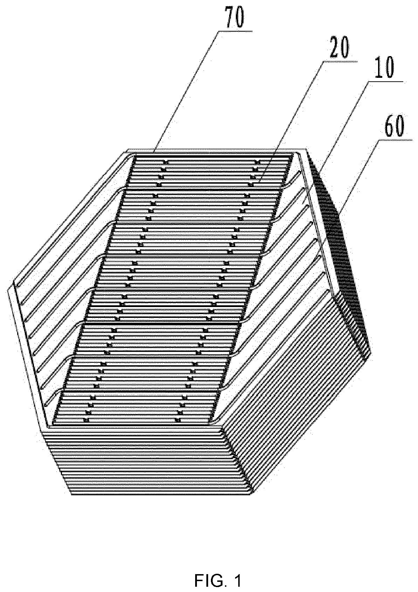

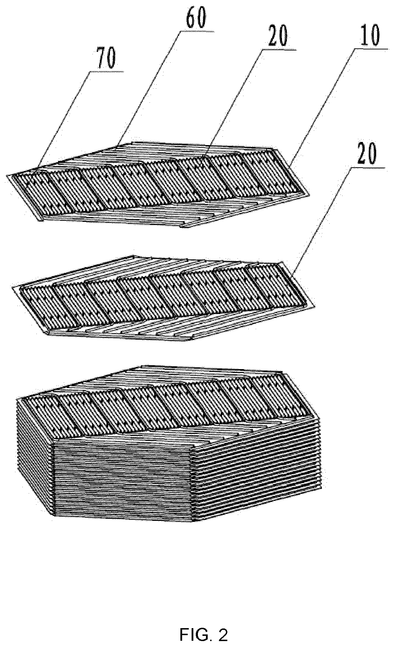

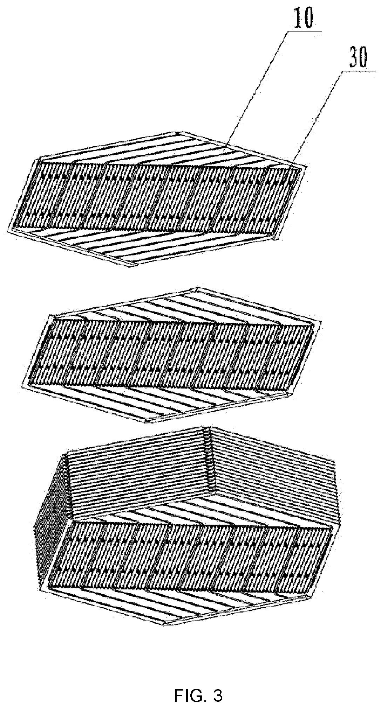

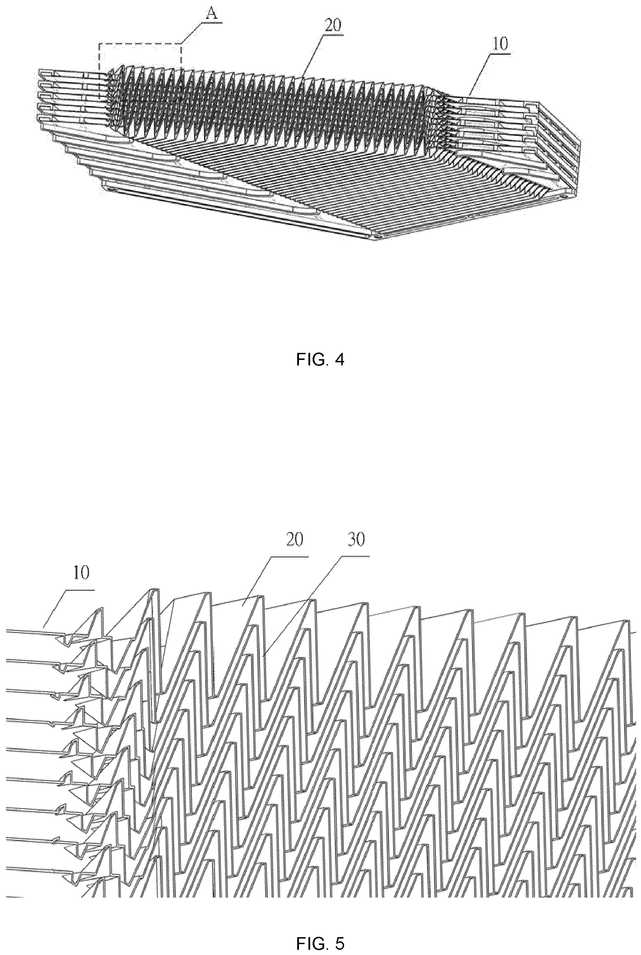

The present disclosure provides a heat exchanger, as shown in FIG. 1 to FIG. 6, including a plurality of adjacent sheets 10. The plurality of adjacent sheets 10 are stacked to form the heat exchanger. In an embodiment, the sheets have a hexagonal shape.

The adjacent sheets 10 extend parallel to one another along the same direction. Two adjacent sheets 10 are connected to each other at least at a part of their peripheral edges or middle portions, and a flow channel for fluid flow is formed between adjacent two sheets 10. An upper surface of the sheet 10 is provided with a plurality of raised peak lines 20 that are arranged in parallel and spaced rows and raised upward. A lower surface of the sheet 10 is provided with a plurality of raised contour lines 30 that are arranged in parallel and spaced rows and raised downward. The raised peak lines 20 and the raised contour lines 30 arranged in rows are both connected by continuous peaks and valleys. Between adjacent two sheets 10, a peak of the raised contour line 30 is located between two valleys of the raised peak line 20, and the peak of the raised contour line 30 and the two valleys of the raised peak line 20 are staggered.

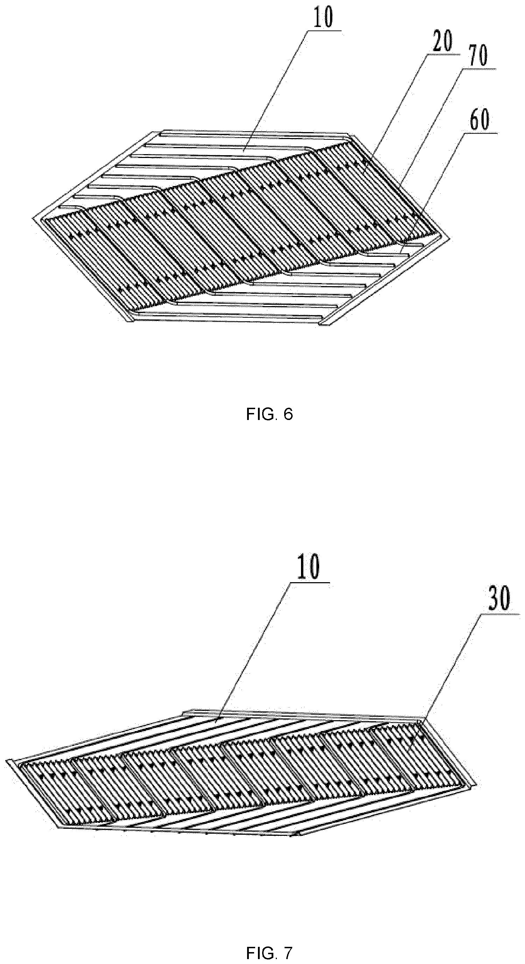

As shown in FIG. 6 to FIG. 10, the peaks 30A of the raised contour lines 30 extend downward to the valleys 20B of the raised peak lines 20, and the peaks 20A of the raised peak lines 20 extend upward to the valleys 30B of the raised contour lines 30. Two sides of the peaks 30A of the raised contour lines 30 and two sides of the valleys 20B of the raised peak lines 20 form a two-side gap. The fluid flows along a bottom of the valleys 30B of the raised contour lines 30, a bottom of the valleys of the raised peak lines 20, and the two-side gap.

Between adjacent three sheets, a first flow channel 40 and a second flow channel 50 are formed by the paths between the peaks and valleys. The first flow channel 40 and second flow channel 50 are bypass. The fluid flows through the first flow channel 40 along a first direction and a second direction, and the fluid flows through the second flow channel 50 along the first direction and a third direction. A convection is formed by the fluid flowing through the first flow channel 40 and the second flow channel 50. The first direction is arranged at an angle with respect to the second direction and the third direction. The second direction and the third direction are parallel and opposite to each other.

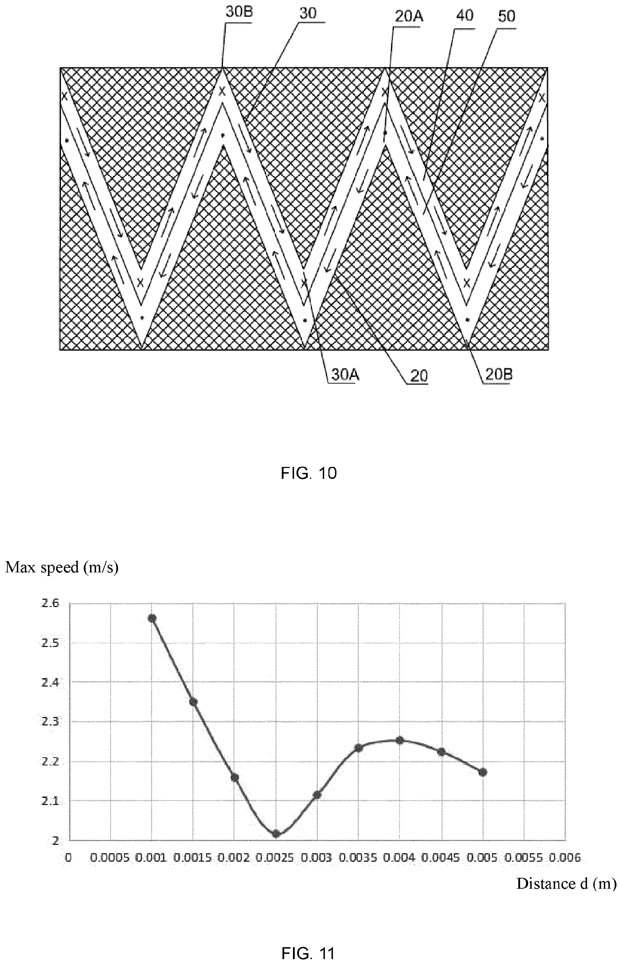

As shown in FIG. 10, the first direction is a horizontal direction, and the second direction and the third direction are perpendicular to a paper surface. The second direction is perpendicular to the paper surface inward, and the third direction is perpendicular to the paper surface outward.

It should be noted that the first direction is the horizontal direction, including a horizontal meandering-to-left direction and a horizontal meandering-to-right direction. The second direction is a direction shown as × in the figure, representing the direction perpendicular to the paper surface inward. The third direction is a direction shown as · in the figure, representing the direction perpendicular to the paper surface inward.

Preferably, the fluid flows in the first flow channel along a first direction A, the first direction A being the horizontal meandering-to-right direction; and the fluid flows in the second flow channel along a first direction B, the first direction B being the horizontal meandering-to-left direction. The first direction A is opposite to the first direction B, so that at least two convections are formed as the fluid passes through the first flow channel and the second flow channel.

During heat exchange, in adjacent three sheets, at least two airflows pass through the middles of the sheets during a heat exchange process, which realizes convective heat transfer and mass transfer. A first airflow flows through the first flow channel in the second direction, and a second airflow flows through the second flow channel in the third direction. The second direction and the third direction are parallel and opposite, so as to form a convection in the direction perpendicular to the paper surface. At the same time, the first airflow and the second airflow also meander forward through the gaps formed between the raised contour lines and the raised peak lines. The first airflow meanders forward in the first flow channel along the first direction A, and the second air flow meanders forward in the second flow channel along the first direction B. The first direction A and the first direction B are opposite, so as to form another convection in the horizontal direction.

According to the invention a trajectory formed by the fluid flowing along the first direction is a curve. The curve has alternating peaks and valleys. When flowing through the first flow channel 40 and the second flow channel 50, the airflow meanders forward through the gaps formed between the raised contour lines 30 and the raised peak lines 20. The trajectory formed by the airflow flowing forward may be in many shapes, including but not limited to, shapes of a sine wave and a triangle wave.

The trajectory formed by the fluid flowing along the second direction or the third direction is a straight line. The second direction and the third direction are parallel and opposite to each other, which is advantageous for forming the convection in the first flow channel 40 and the second flow channel 50. A horizontal angle between the first direction and the second direction, and between the first direction and the third direction is α. α is ranged from 30° to 90°.

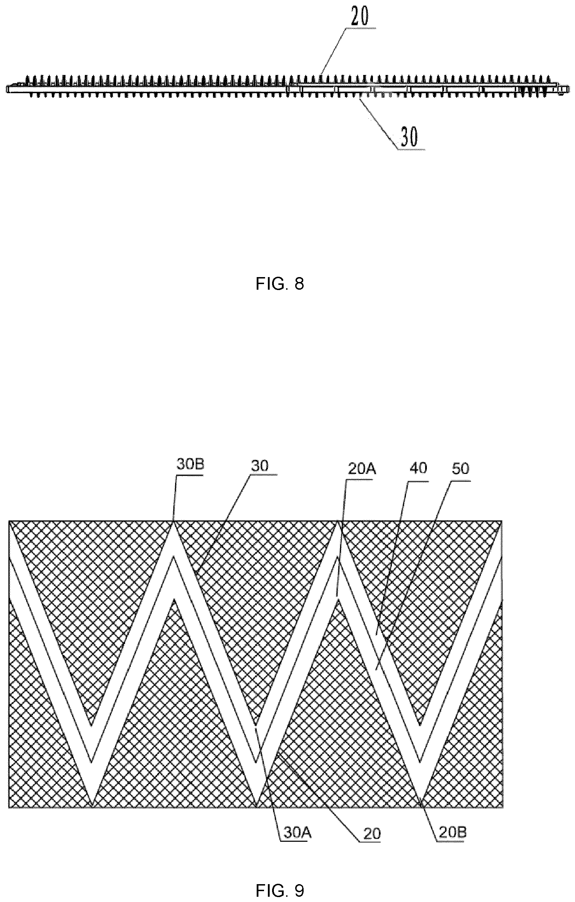

More preferably, as shown in FIG. 9 and FIG. 10, the trajectory formed by the fluid flowing along the first direction is a triangle wave. The triangle wave has alternating triangular peaks and triangular valleys. The trajectory formed by the fluid flowing along the first direction satisfies a sawtooth function. In a case that the trajectory formed by the fluid flowing in the first flow channel 40 and the second flow channel 50 along the first direction is the triangle wave, the peaks 20A of the raised peak lines 20, the valleys 20B of the raised peak lines 20, the peaks 30A of the raised contour lines 30, and the valleys 30B of the raised contour lines 30 are all at an included angle. The included angle is preferably an acute angle.

The trajectory formed by the fluid flowing along the first direction is the triangle wave, which increases a heat exchange area between the fluid and the flow channels, and in addition, reduces the airflow velocity as well as reduces a resistance of the airflow passing through the flow channels. Thus, the airflow velocity distribution is more uniform, thereby improving heat exchange efficiency.

More preferably, the peak 30A of the raised contour line 30 extends into the valley 20B between two raised peak lines 20, and the peak 20A of the raised peak line 20 extends into the valley 30B between two raised contour lines 30. The raised contour line 30 and the raised peak line 20 are parallel, and have the same slope in the same length direction. A peak top of the raised contour line 30 is located on a center line of the valley between two raised peak lines 20, and a peak top of the raised peak line 20 is located on a center line of the valley between two raised contour lines 30.

In another embodiment of the flow channel, the trajectory formed by the fluid flowing along the first direction is approximately the triangle wave. The peaks 20A of the raised peak lines 20, the valleys 20B of the raised peak lines 20, the peaks 30A of the raised contour lines 30, and the valleys 30B of the raised contour lines 30 each are provided with a bending transition section. Alternatively, the angles formed by the peaks 20A of the raised peak lines 20, the valleys 20B of the raised peak lines 20, the peaks 30A of the raised contour lines 30, and the valleys 30B of the raised contour lines 30 each are provided with, but limited to, a rounded transition. The present disclosure facilitates industrial implementation by providing the bending transition or the rounded transition.

It should also be noted that the sheets may have various shapes, which preferably have a hexagonal shape. The sheets may also have, but not limited to, a square shape, a circular shape, an oval shape, an octagonal shape, a diamond shape, etc.

Therefore, in the present disclosure, the plurality of sheets are stacked and connected adjacently to form the heat exchanger. The plurality of sheets are stacked to form the first flow channels and the second flow channels that are alternated with each other.

The flow channels are formed between the adjacent sheets. Specifically, a plurality of flow channels are formed between the raised peak lines 20 arranged in rows and the raised contour lines 30 arranged in rows, and the fluid (airflow) flows through the flow channels formed between the raised peak lines 20 and the raised contour lines 30. An upper sheet and a lower sheet are arranged in staggered and parallel fashion. After being stacked, the raised contour lines 30 of the upper sheet are staggered with respect to the raised peak lines 20 of the lower sheet. The peaks 20A of the raised peak lines 20 extend upward into the valleys 30B of the raised contour lines 30. The two sides of the peaks 30A of the raised contour lines 30 and the two sides of the valleys 20B of the raised peak lines 20 form the two-side gap. The fluid flows along the bottom of the valleys 30B of the raised contour lines 30, the bottom of the valleys 20B of the peak lines 20, and the two-side gap, which greatly enhances the heat exchange area of the fluid, thereby improving the heat exchange efficiency.

The present disclosure, by allowing the plurality of airflows to pass through the middle sheets, achieves the convection heat transfer and mass transfer. The plurality of airflows flow through the first flow channel and the second flow channel, so as to equalize the airflow velocity distribution, as well as reduce the airflow velocity and reduce the resistance of the airflow passing through the flow channels, thereby improving the heat exchange efficiency.

Further, a distance between the raised contour lines and the raised peak lines is d. d is preferably ranged from 0.5 mm to 5 mm, which may specifically be, but not limited to, 0.5 mm, 1 mm, 2 mm, 3 mm, 4 mm, or 5 mm. More preferably, d is ranged from 1 mm to 4 mm. Even more preferably, d is ranged from 1 mm to 3 mm.

The distance d between the raised contour lines and the raised peak lines may affect a maximum speed of the airflow and a speed change at a flow channel center, further affecting airflow uniformity. In the present disclosure, d may be ranged from 0.5 mm to 5 mm. When d is ranged from 0.5 mm to 5 mm, and an inlet wind speed is 1 m/s, the maximum speed of the airflow is less than 2.6 m/s, and the speed change at the flow channel center is less than or equal to 12%, which can provide better airflow uniformity.

As shown in FIG. 11, as d gradually increases from 0.5 mm, the maximum speed of the airflow gradually decreases. As d increases from 0.5 mm to 1 mm ~ 2.5 mm, the maximum speed of the airflow is in a lowest range, and the maximum speed may be decreased by 20% to 30%. As d increases from 1 mm ~ 2.5 mm to 4 mm ~ 5 mm, the maximum speed of the airflow increases slowly, and in this case the maximum speed is increased by less than 10%. A smaller maximum speed of the airflow indicates better airflow uniformity.

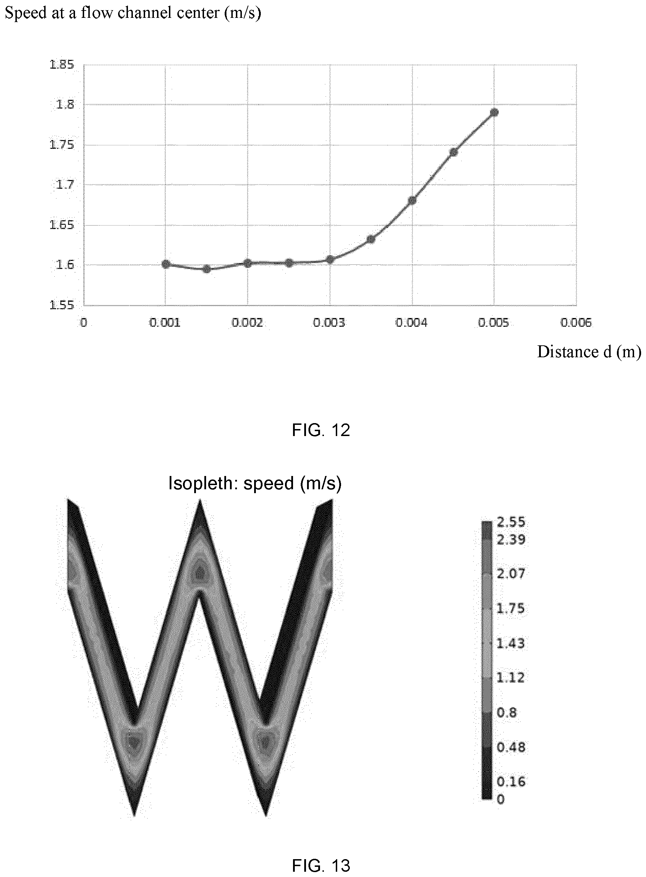

As shown in FIG. 12, as d gradually increases from 0.5 mm to 3 mm, the speed change at the flow channel center is very small, with the speed basically keeping unchanged. As d increases from 3 mm to 5 mm, the speed at the flow channel center gradually increases, and the speed change at the flow channel center is less than or equal to 12%.

A distance between two adjacent peaks of the raised contour lines is L. L is preferably ranged from 2 mm to 100 mm. More preferably, L is ranged from 3 mm to 50 mm. In addition, a vertical distance between the peaks of the raised contour lines and the valleys of the raised contour lines is H. H satisfies (H*H)/(L*L)>0.75. More preferably, H satisfies 1.25≤(H*H)/(L*L)≤6.6.

The distance L between two adjacent peaks of the raised contour lines and the vertical distance H between the peaks of the raised contour lines and the valleys of the raised contour lines jointly affect heat exchange effect and manufacturability of the sheets. When (H*H)/(L*L)≥0.75, high heat dissipation effect may be obtained. In principle, the larger the value of (H*H)/(L*L) is, the larger the heat exchange area of the heat exchanger is, and the better the heat exchange effect is. However, if the value of (H*H)/(L*L) is beyond an appropriate range, namely (H*H)/(L*L)>6.6, a draw down ratio is too large, which increases difficulty and costs in manufacturing the sheets, and also reduces a service life of the sheets.

An angle of the peaks of the raised contour lines is δ1, and an angle of the valleys of the raised peak lines is δ2. δ1≥20.5°, and δ2≥20.5°. Preferably, 22°≤δ1≤60°, and 22°≤δ2≤60°. When δ1, δ2≥20.5°, the heat exchange area can be ensured to have a large range, so as to obtain a good heat exchange efficiency. If δ1, δ2>60°, the draw down ratio is too small, which cannot guarantee the transfer area of the heat exchanger core. If δ1, δ2<20.5°, the manufacturing process of the sheets is difficult.

The peak of the raised contour line extends into the valley between two raised peak lines, and the peak of the raised peak line extends into the valley between two raised contour lines. An extension length is preferably a quarter to two-thirds of a depth of the valley, which may specifically be, but not limited to, one-quarter, one-third, one-half, and two-thirds. This can ensure the exchange area of the heat exchanger core and improve the uniformity of the fluid velocity distribution.

From above, in the present disclosure, the distance d between the raised contour lines and the raised peak lines, the distance L between two adjacent peaks of the raised contour lines, the vertical distance H between the peaks of the raised contour lines and the valleys of the raised contour lines, the angle of the peaks of the raised contour lines δ1, and the angle of the valleys of the raised peak lines δ2 are used to jointly affect the uniformity of the airflow flow, the heat exchange area, and the uniformity of the velocity distribution of the flow field , thereby obtaining best heat exchange efficiency.

The sheets are provided with a plurality of raised guiding strips 60 on two sides of the raised peak lines 20 arranged in rows. Inner ends of the raised guiding strips 60 are joined to ends of the raised peak lines 20. Outer edges of the sheets that are located at outer ends of the raised guiding strips 60 are provided with openings, and the remaining outer edges of the sheets are provided with ribs 70. The arrangement of the raised guiding strips 60 can change the airflow path, so that the airflow path can be flexibly changed, and can also change the airflow velocity, so as to elongate the heat transfer time, thereby improving the heat exchange efficiency.

The raised guiding strips 60 are arranged at an included angle β with the second direction or the third direction, so as to allow the fluid to flow through the first flow channel along the first direction, and along the second direction or the third direction. Preferably, 0°<β<90°. More preferably, 30°≤β≤60°.

The raised guiding strips of adjacent sheets are arranged at an included angle γ. Preferably, 0°<γ<180°. More preferably, 30°≤γ≤150°.

In a preferable embodiment of the present disclosure, the sheets each have a microporous structure that is spread over the raised peak lines and the raised contour lines. The microporous structure facilitates permeation of water molecules, and thus realizes humidity exchange of the heat exchanger. Preferably, the sheets are provided with a plurality of micropores with a pore diameter of 0.01 µm to 0.3 µm. More preferably, the pore diameter of the micropores is ranged from 0.02 µm to 0.15 µm. Even more preferably, the pore diameter of the micropores is ranged from 0.05 µm to 0.1 µm.

The micropores form channels through which water molecules pass, so as to allow water molecules to enter and exit the first flow channel. In an actual process, water vapor contents of the airflows in the first flow channel and the second flow channel are not the same, which forms a water vapor concentration difference. The water vapor concentration difference provides a driving force for diffusion of water molecules, so as to allow the water molecules to move through the micropores from a region of low concentration. In this way, the exchange of the water vapor between the first flow channel and the second flow channel is realized, which is conducive to the uniformity of heat exchange.

The sheets each are provided with at least one layer of polymer composite coating, which has selective permeability to water molecules. Due to having a temperature exchange function and a humidity exchange function, the polymer composite coating can exchange sensible heat and latent heat at the same time, without allowing other gas molecules to pass through. This ensures tightness of the heat exchanger core, so as to avoid mixing of ventilation air and exhaust air. Thus, the polymer composite coating is suitable for the ventilation system. Preferably, the polymer composite coating may include one or more of polyoxyethylene, polystyrene, polycarbonate, polymethyl methacrylate, polyacrylic acid, polyether polyamide, aliphatic polyurethane, sulfonated styrene, sulfonated polyacrylic acid, and sulfonated polyether ether ketone.

The present disclosure will be described in detail below in connection with a specific embodiment.

A heat exchanger includes a plurality of adjacent sheets. The adjacent sheets extend parallel to one another along the same direction. The adjacent sheets are connected to one another at least at their peripheral edges or middle portions. Flow channels for fluid flow are formed between the adjacent sheets. An upper surface of each sheet is provided with a plurality of raised peak lines that are arranged in parallel and spaced rows and raised upward, and a lower surface of each sheet is provided with a plurality of raised contour lines that are arranged in parallel and spaced rows and raised downward. The raised peak lines and the raised contour lines arranged in rows are both connected by continuous peaks and valleys. Between adjacent two sheets, the peaks of the raised contour lines are located between two valleys of the raised peak lines, and the peaks of the raised contour lines and the two valleys of the raised peak lines are staggered. A distance between the raised contour lines and the raised peak lines is d, a distance between two adjacent peaks of the raised contour lines is L, a vertical distance between the peaks of the raised contour lines and the valleys of the raised contour lines is H, an angle of the peaks of the raised contour lines is δ1, and an angle of the valleys of the raised peak lines is δ2.

Between adjacent three sheets, the peaks of the raised contour lines are located between two valleys of the raised peak lines, and the peaks of the raised contour lines and the two valleys of the raised peak lines are staggered, so as to form a first flow channel and a second flow channel. Fluid flows through the first flow channel along a first direction A and a second direction, and fluid flows through the second flow channel along a first direction B and a third direction. A convection is formed as the fluid passes through the first flow channel and the second flow channel.

Sizes of heat exchangers as shown in embodiments 1 to 5 are set according to chart 1.

### Chart 1 Size chart of heat exchanger

| Item | Embodiment 1 | Embodiment 2 | Embodiment 3 | Embodiment 4 | Embodiment 5 |
|---|---|---|---|---|---|
| d | 1mm | 2mm | 3mm | 4mm | 6mm |
| L | 3mm | 5mm | 8mm | 10mm | 15mm |
| H | 3.5 mm | 7 mm | 10mm | 17mm | 25 mm |
| δ1 | 46.4° | 39.3° | 43.6° | 32.8° | 33.4° |
| δ2 | 22° | 25° | 30° | 40° | 35° |

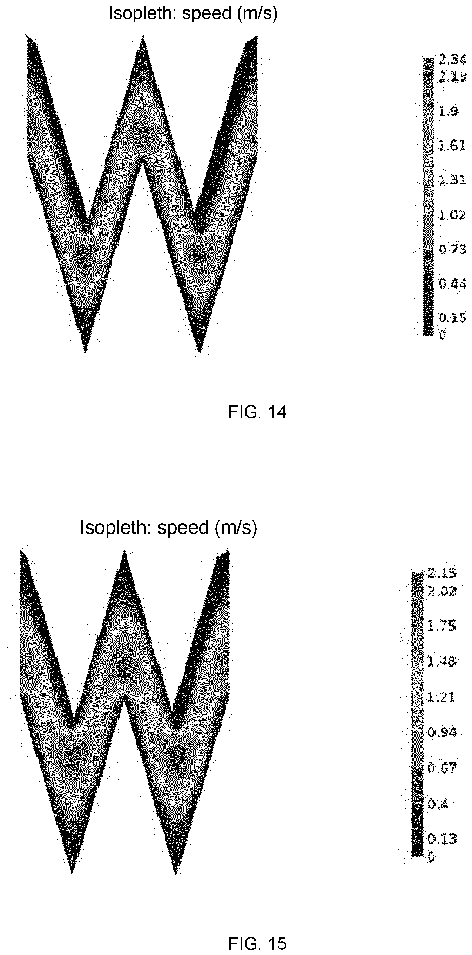

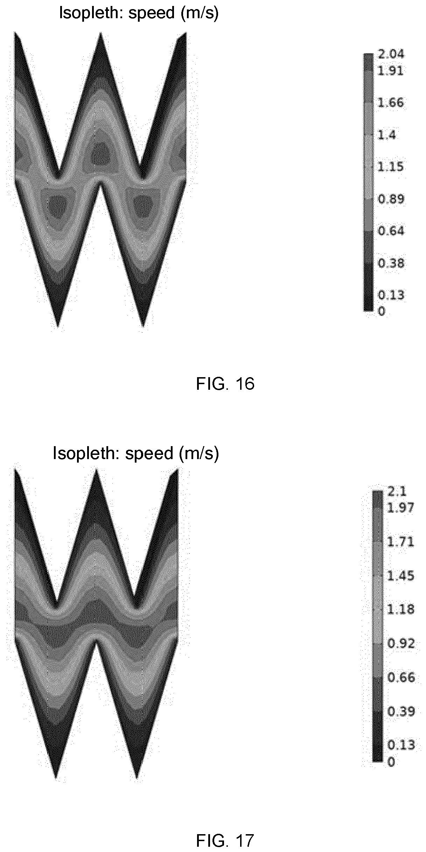

Computer simulation of fluid velocity distribution is performed on the heat exchanger as shown in embodiments 1 to 5, results of which are shown in FIG. 13 to FIG. 17. The heat exchangers in the embodiments 1 to 3 have very uniform fluid velocity distributions. The heat exchanger in the embodiment 4 has a relatively uniform fluid velocity distribution. Compared to those in the embodiments 1 to 4, the heat exchanger in the embodiment 5 has a less uniform fluid velocity distribution, which satisfies basic requirement.

The heat exchangers as shown in embodiments 1 to 5 are subjected to exchange efficiency detection, experimental results of which are shown in chart 2.

### Chart 2 Heat exchange effect chart of heat exchangers

| Item | Embodimen t 1 | Embodiment 2 | Embodimen t3 | Embodimen t4 | Embodimen t5 |
|---|---|---|---|---|---|
| Temperatur e exchange efficiency (%) | 82.1 | 61.4 | 51.2 | 39.1 | 30.1 |
| Humidity exchange efficiency (%) | 52.8 | 50.4 | 38.8 | 28.2 | 20.6 |
| Enthalpy (%) | 60.1 | 53.2 | 41.9 | 30.9 | 23.0 |
| Windage (Pa) | 28.4 | 8.5 | 4.2 | 2.6 | 1.2 |

The experimental results in chart 2 are based on the following experimental conditions: an outdoor temperature 35°C, an outdoor humidity 28°C, an indoor temperature 27°C, an indoor humidity 19.5°C, an air velocity 1m/s, and a projected heat exchange area of 20 square meters.

It should be noted that an experimental instrument used in the above experiment is an energy recovery enthalpy difference chamber, and an experimental method refers to the standard "GBIT 21087-2020", energy recovery ventilators for outdoor air handling. The above humidity refers to a dew point temperature, which represents the temperature at which the air is cooled to saturation with constant water vapor content and air pressure, and is measured by a psychrometer.

The descriptions above are preferred implementations of the present disclosure. It should be noted that for a person of ordinary skill in the art, various improvements and modifications can be made provided they are within the scope of the appended claims.

## Claims

1. A heat exchanger, comprising: a plurality of adjacent sheets (10),
wherein the adjacent sheets (10) extend parallel to one another along the same direction;
wherein the adjacent sheets (10) are connected to one other at least at a part of their peripheral edges or middle portions, and flow channels for fluid flow are formed between the adjacent sheets (10);
wherein an upper surface of each sheet (10) is provided with a plurality of raised peak lines (20) that are arranged in parallel and spaced rows and raised upward, and a lower surface of each sheet (10) is provided with a plurality of raised contour lines (30) that are arranged in parallel and spaced rows and raised downward, wherein the raised peak lines (20) and the raised contour lines (30) that are arranged in rows are both connected by continuous peaks and valleys;
wherein between adjacent three sheets (10), the peaks (30A) of the raised contour lines (30) are located between two valleys (20B) of the raised peak lines (20), and the peaks (30A) of the raised contour lines (30) and the two valleys (20B) of the raised peak lines (20) are staggered, to form a first flow channel (40) and a second flow channel (50);
wherein fluid flows through the first flow channel (40) along a first direction and a second direction, and fluid flows through the second flow channel (50) along the first direction and a third direction, to form convection by the fluid flowing through the first flow channel (40) and the second flow channel (50); and
the first direction is arranged at an angle with respect to the second direction and the third direction, and the second direction and the third direction are parallel and opposite to each other;
**characterized in that** a trajectory formed by the fluid flowing along the first direction is a curve, the curve having alternating peaks and valleys;
a trajectory formed by the fluid flowing along the second direction or the third direction is a straight line, the second direction and the third direction being parallel and opposite to each other; and
a horizontal angle between the first direction and the second direction, and between the first direction and the third direction is α, and α is ranged from 30° to 90°.

2. The heat exchanger according to claim 1, wherein the fluid flows through the first flow channel along a first direction A, and the fluid flows through the second flow channel along a first direction B, the first direction A is opposite to the first direction B, and at least two convections are formed by the fluid flowing through the first flow channel (40) and the second flow channel (50).

3. The heat exchanger according to claim 1, wherein the trajectory formed by the fluid flowing along the first direction is a triangle wave, the triangle wave having alternating triangular peaks and triangular valleys; and
the first direction is perpendicular to the second direction and the third direction.

4. The heat exchanger according to claim 1, wherein the peaks (30A) of the raised contour lines (30) extend into the valleys (20B) each between two raised peak lines (20), the peaks (20A) of the raised peak lines (20) extend into the valleys (30B) each between two raised contour lines (30), and the raised contour lines (30) are parallel to the raised peak lines (20).

5. The heat exchanger according to claim 4, wherein a distance between the raised contour lines (30) and the raised peak lines (20) is d, and d is ranged from 0.5 mm to 5 mm;
a distance between adjacent two peaks (30A) of the raised contour lines (30) is L, and L is ranged from 2 mm to 100 mm;
a vertical distance between the peaks (30A) of the raised contour lines (30) and the valleys (30B) of the raised contour lines (30) is H, and H satisfies (H*H)/(L*L)≥0.75; and
an angle of the peaks (30A) of the raised contour lines (30) is δ1, and an angle of the valleys (20B) of the raised peak lines (20) is δ2, δ1≥20.5°, and δ2≥20.5°.

6. The heat exchanger according to claim 5, wherein d is ranged from 1 mm to 3mm, L is ranged from 3 mm to 50 mm, H satisfies 1.25≤(H*H)/(L*L)≤6.6, 22°≤δ1≤60°, and 22°≤δ2≤60°.

7. The heat exchanger according to claim 1, wherein the peaks (30A) of the raised contour lines (30) extend into the valleys (20B) each between two raised peak lines (20), the peaks (20A) of the raised peak lines (20) extend into the valleys (30B) each between two raised contour lines (30), and an extension length is a quarter to two-thirds of a depth of the valleys; and
peak tops of the raised contour lines (30) are located on center lines of the valleys (20B) each between two raised peak lines (20), and peak tops of the raised peak lines (20) are located on center lines of the valleys (30B) each between two raised contour lines (30).

8. The heat exchanger according to claim 1, wherein the sheets are provided with a plurality of raised guiding strips (60) on two sides of the raised peak lines (20) arranged in rows; inner ends of the raised guiding strips (60) are joined to ends of the raised peak lines (20), outer edges of the sheets that are located at outer ends of the raised guiding strips (60) are provided with openings, and the remaining outer edges of the sheets are provided with ribs (70).

9. The heat exchanger according to claim 8, wherein the raised guiding strips (60) are arranged at an included angle β with the second direction or the third direction, and 0°<β<90°.

10. The heat exchanger according to claim 8, wherein the raised guiding strips (60) of the adjacent sheets are arranged at an included angle γ, and 0°<γ<180°.

11. The heat exchanger according to claim 1, wherein the sheets each have a microporous structure, and a pore diameter of a micropore is ranged from 0.01 µm to 0.3 µm.

12. The heat exchanger according to claim 1, wherein the sheets each are provided with at least one layer of polymer composite coating, the polymer composite coating having selective permeability to water molecules.

## Patentansprüche

1. Wärmetauscher, aufweisend: mehrere benachbarte Platten (10),
wobei sich die benachbarten Platten (10) parallel zueinander entlang derselben Richtung erstrecken;
wobei die benachbarten Platten (10) mindestens an einem Teil ihrer Umfangsränder oder mittleren Abschnitte miteinander verbunden sind und zwischen den benachbarten Platten (10) Strömungskanäle für einen Fluidstrom ausgebildet sind;
wobei eine obere Oberfläche jeder Platte (10) mit mehreren erhabenen Spitzenlinien (20) versehen ist, die in parallelen und beabstandeten Reihen angeordnet und nach oben erhaben sind, und eine untere Oberfläche jeder Platte (10) mit mehreren erhabenen Konturlinien (30) versehen ist, die in parallelen und beabstandeten Reihen angeordnet und nach unten erhaben sind, wobei die erhabenen Spitzenlinien (20) und die erhabenen Konturlinien (30), die in Reihen angeordnet sind, beide durch kontinuierliche Spitzen und Täler verbunden sind;
wobei zwischen benachbarten drei Platten (10) die Spitzen (30A) der erhabenen Konturlinien (30) zwischen zwei Tälern (20B) der erhabenen Spitzenlinien (20) angeordnet sind und die Spitzen (30A) der erhabenen Konturlinien (30) und die zwei Täler (20B) der erhabenen Spitzenlinien (20) versetzt angeordnet sind, um einen ersten Strömungskanal (40) und einen zweiten Strömungskanal (50) zu bilden;
wobei Fluid durch den ersten Strömungskanal (40) entlang einer ersten Richtung und einer zweiten Richtung strömt und Fluid durch den zweiten Strömungskanal (50) entlang der ersten Richtung und einer dritten Richtung strömt, um durch das Fluid, das durch den ersten Strömungskanal (40) und den zweiten Strömungskanal (50) strömt, Konvektion zu schaffen; und
die erste Richtung in einem Winkel in Bezug auf die zweite Richtung und die dritte Richtung angeordnet ist und die zweite Richtung und die dritte Richtung parallel zueinander und einander entgegengesetzt sind,
**dadurch gekennzeichnet, dass**
eine Trajektorie, die durch das Fluid gebildet wird, das entlang der ersten Richtung strömt, eine Kurve ist, wobei die Kurve abwechselnde Spitzen und Täler aufweist;
eine Trajektorie, die durch das Fluid gebildet wird, das entlang der zweiten Richtung oder der dritten Richtung strömt, eine Gerade ist, wobei die zweite Richtung und die dritte Richtung parallel zueinander und einander entgegengesetzt sind; und
ein horizontaler Winkel zwischen der ersten Richtung und der zweiten Richtung und zwischen der ersten Richtung und der dritten Richtung α ist und α im Bereich von 30° bis 90° liegt.

2. Wärmetauscher nach Anspruch 1, wobei das Fluid durch den ersten Strömungskanal entlang einer ersten Richtung A strömt und das Fluid durch den zweiten Strömungskanal entlang einer ersten Richtung B strömt, die erste Richtung A der ersten Richtung B entgegengesetzt ist und durch das Fluid, das durch den ersten Strömungskanal (40) und den zweiten Strömungskanal (50) strömt, mindestens zwei Konvektionen geschaffen werden.

3. Wärmetauscher nach Anspruch 1, wobei die Trajektorie, die durch das entlang der ersten Richtung strömende Fluid gebildet wird, eine Dreieckswelle ist, wobei die Dreieckswelle abwechselnde dreieckige Spitzen und dreieckige Täler aufweist; und
die erste Richtung im rechten Winkel zu der zweiten Richtung und der dritten Richtung verläuft.

4. Wärmetauscher nach Anspruch 1, wobei sich die Spitzen (30A) der erhabenen Konturlinien (30) jeweils in die Täler (20B) zwischen zwei erhabenen Spitzenlinien (20) erstrecken, die Spitzen (20A) der erhabenen Spitzenlinien (20) sich jeweils in die Täler (30B) zwischen zwei erhabenen Konturlinien (30) erstrecken und die erhabenen Konturlinien (30) zu den erhabenen Spitzenlinien (20) parallel verlaufen.

5. Wärmetauscher nach Anspruch 4, wobei ein Abstand zwischen den erhabenen Konturlinien (30) und den erhabenen Spitzenlinien (20) d ist und d im Bereich von 0,5 mm bis 5 mm liegt;
ein Abstand zwischen zwei benachbarten Spitzen (30A) der erhabenen Konturlinien (30) L ist und L im Bereich von 2 mm bis 100 mm liegt;
ein vertikaler Abstand zwischen den Spitzen (30A) der erhabenen Konturlinien (30) und den Tälern (30B) der erhabenen Konturlinien (30) H ist und H (H*H)/(L*L)≥0,75 erfüllt; und
ein Winkel der Spitzen (30A) der erhabenen Konturlinien (30) δ1 ist und ein Winkel der Täler (20B) der erhabenen Spitzenlinien (20) δ2 ist, δ1≥20,5° und δ2≥20,5°.

6. Wärmetauscher nach Anspruch 5, wobei d im Bereich von 1 mm bis 3 mm liegt, L im Bereich von 3 mm bis 50 mm liegt, H 1,25≤(H*H)/(L*L)≤6,6 erfüllt, 22°≤δ1≤60° und 22°≤δ2≤60°.

7. Wärmetauscher nach Anspruch 1, wobei sich die Spitzen (30A) der erhabenen Konturlinien (30) jeweils in die Täler (20B) zwischen zwei erhabenen Spitzenlinien (20) erstrecken, die Spitzen (20A) der erhabenen Spitzenlinien (20) sich jeweils in die Täler (30B) zwischen zwei erhabenen Konturlinien (30) erstrecken und eine Erstreckungslänge ein Viertel bis zwei Drittel einer Tiefe der Täler beträgt; und
Spitzenenden der erhabenen Konturlinien (30) jeweils auf Mittellinien der Täler (20B) zwischen zwei erhabenen Spitzenlinien (20) angeordnet sind und Spitzenenden der erhabenen Spitzenlinien (20) jeweils auf Mittellinien der Täler (30B) zwischen zwei erhabenen Konturlinien (30) angeordnet sind.

8. Wärmetauscher nach Anspruch 1, wobei die Platten mit mehreren erhabenen Leitlamellen (60) auf zwei Seiten der erhabenen Spitzenlinien (20), die in Reihen angeordnet sind, versehen sind; innere Enden der erhabenen Leitlamellen (60) mit Enden der erhabenen Spitzenlinien (20) verbunden sind, äußere Ränder der Platten, die an äußeren Enden der erhabenen Leitlamellen (60) angeordnet sind, mit Öffnungen versehen sind und die übrigen äußeren Ränder der Platten mit Rippen (70) versehen sind.

9. Wärmetauscher nach Anspruch 8, wobei die erhabenen Leitlamellen (60) in einem mit der zweiten Richtung oder der dritten Richtung eingeschlossenen Winkel β angeordnet sind und 0°<β<90°.

10. Wärmetauscher nach Anspruch 8, wobei die erhabenen Leitlamellen (60) der benachbarten Platten in einem eingeschlossenen Winkel γ angeordnet sind und 0°<γ<180°.

11. Wärmetauscher nach Anspruch 1, wobei die Platten jeweils eine mikroporöse Struktur aufweisen und ein Porendurchmesser einer Mikropore im Bereich von 0,01 µm bis 0,3 µm liegt.

12. Wärmetauscher nach Anspruch 1, wobei die Platten jeweils mit mindestens einer Schicht aus Polymerkompositbeschichtung versehen sind, wobei die Polymerkompositbeschichtung selektive Durchlässigkeit für Wassermoleküle aufweist.

## Revendications

1. Échangeur de chaleur, comprenant : une pluralité de feuilles adjacentes (10),
dans lequel les feuilles adjacentes (10) s'étendent parallèlement l'une à l'autre le long de la même direction ;
dans lequel les feuilles adjacentes (10) sont connectées l'une à l'autre au moins à une partie de leurs bords périphériques ou parties centrales, et des canaux d'écoulement pour l'écoulement de fluide sont formés entre les feuilles adjacentes (10) ;
dans lequel une surface supérieure de chaque feuille (10) est dotée d'une pluralité de lignes de crête surélevées (20) qui sont agencées dans des rangées parallèles et espacées et surélevées vers le haut, et une surface inférieure de chaque feuille (10) est dotée d'une pluralité de lignes de contour surélevées (30) qui sont agencées dans des rangées parallèles et espacées et surélevées vers le bas, dans lequel les lignes de crête surélevées (20) et les lignes de contour surélevées (30) qui sont agencées en rangées sont toutes deux connectées par des crêtes et des creux continus ;
dans lequel entre trois feuilles (10) adjacentes, les crêtes (30A) des lignes de contour surélevées (30) sont situées entre deux creux (20B) des lignes de crête surélevées (20), et les crêtes (30A) des lignes de contour surélevées (30) et les deux creux (20B) des lignes de crête surélevées (20) sont empilés, pour former un premier canal d'écoulement (40) et un second canal d'écoulement (50) ;
dans lequel
du fluide s'écoule à travers le premier canal d'écoulement (40) le long d'une première direction et d'une deuxième direction, et du fluide s'écoule à travers le second canal d'écoulement (50) le long de la première direction et d'une troisième direction, pour former de la convection par le fluide s'écoulant à travers le premier canal d'écoulement (40) et le second canal d'écoulement (50) ; et
la première direction est agencée à un angle par rapport à la deuxième direction et la troisième direction, et la deuxième direction et la troisième direction sont parallèles et opposées l'une à l'autre ;
**caractérisé en ce que**
une trajectoire formée par le fluide s'écoulant le long de la première direction est une courbe, la courbe ayant des crêtes et des creux en alternance ;
une trajectoire formée par le fluide s'écoulant le long de la deuxième direction ou de la troisième direction est une ligne droite, la deuxième direction et la troisième direction étant parallèles et opposées l'une à l'autre ; et
un angle horizontal entre la première direction et la deuxième direction, et entre la première direction et la troisième direction est α, et α est situé dans la plage de 30° à 90°.

2. Échangeur de chaleur selon la revendication 1, dans lequel le fluide s'écoule à travers le premier canal d'écoulement le long d'une première direction A, et le fluide s'écoule à travers le second canal d'écoulement le long d'une première direction B, la première direction A est opposée à la première direction B, et au moins deux convections sont formées par le fluide s'écoulant à travers le premier canal d'écoulement (40) et le second canal d'écoulement (50).

3. Échangeur de chaleur selon la revendication 1, dans lequel la trajectoire formée par le fluide s'écoulant le long de la première direction est une onde triangulaire, l'onde triangulaire ayant des crêtes triangulaires et des creux triangulaires en alternance ; et
la première direction est perpendiculaire à la deuxième direction et à la troisième direction.

4. Échangeur de chaleur selon la revendication 1, dans lequel les crêtes (30A) des lignes de contour surélevées (30) s'étendent jusque dans les creux (20B) chacune entre deux lignes de crêtes surélevées (20), les crêtes (20A) des lignes de crête surélevées (20) s'étendent jusque dans les creux (30B) chacune entre deux lignes de contour surélevées (30), et les lignes de contour surélevées (30) sont parallèles aux lignes de crête surélevées (20).

5. Échangeur de chaleur selon la revendication 4, dans lequel une distance entre les lignes de contour surélevées (30) et les lignes de crête surélevées (20) est d, et d est située dans la plage de 0,5 mm à 5 mm ;
une distance entre deux crêtes (30A) adjacentes des lignes de contour surélevées (30) est L, et L est située dans la plage de 2 mm à 100 mm ;
une distance verticale entre les crêtes (30A) des lignes de contour surélevées (30) et les creux (30B) des lignes de contour surélevées (30) est H, et H satisfait (H*H)/(L*L)≥0,75 ; et
un angle des crêtes (30A) des lignes de contour surélevées (30) est δ1, et un angle des creux (20B) des lignes de crête surélevées (20) est δ2, δ1≥20,5°, et δ2≥20,5°.

6. Échangeur de chaleur selon la revendication 5, dans lequel d est situé dans la plage de 1 mm à 3 mm, L est agencé de 3 mm à 50 mm, H satisfait 1,25≤(H*H)/(L*L)≤6,6, 22°≤δ1≤60°, et 22°≤δ2≤60°.

7. Échangeur de chaleur selon la revendication 1, dans lequel les crêtes (30A) des lignes de contour surélevées (30) s'étendent jusque dans les creux (20B) chacune entre deux lignes de crêtes surélevées (20), les crêtes (20A) des lignes de crête surélevées (20) s'étendent jusque dans les creux (30B) chacune entre deux lignes de contour surélevées (30), et une longueur d'extension est d'un quart à deux-tiers d'une profondeur des creux ; et
des dessus de crête des lignes de contour surélevées (30) sont situés sur des lignes centrales des creux (20B) chacune entre deux lignes de crête surélevées (20), et des dessus de crête des lignes de crête surélevées (20) sont situés sur des lignes centrales des creux (30B) chacune entre deux lignes de contour surélevées (30).

8. Échangeur de chaleur selon la revendication 1, dans lequel les feuilles sont dotées d'une pluralité de bandes de guidage surélevées (60) sur deux côtés des lignes de crête surélevées (20) agencées en rangées ; des extrémités intérieures des bandes de guidage surélevées (60) sont jointes à des extrémités des lignes de crête surélevées (20), des bords extérieurs des feuilles qui sont situées à des extrémités extérieures des bandes de guidage surélevées (60) sont dotés d'ouvertures, et les bords extérieurs restants des feuilles sont dotés de nervures (70).

9. Échangeur de chaleur selon la revendication 8, dans lequel les bandes de guidage surélevées (60) sont agencées à un angle inclus β avec la deuxième direction ou la troisième direction, et 0°<β<90°.

10. Échangeur de chaleur selon la revendication 8, dans lequel les bandes de guidage surélevées (60) des feuilles adjacentes sont agencées à un angle inclus γ, et 0°<γ<180°.

11. Échangeur de chaleur selon la revendication 1, dans lequel les feuilles ont chacune une structure microporeuse, et un diamètre de pore d'un micro-pore est situé dans la plage de 0,01 µm à 0,3 µm.

12. Échangeur de chaleur selon la revendication 1, dans lequel les feuilles ont chacune au moins une couche de revêtement composite polymère, le revête composite polymère ayant une perméabilité sélective aux molécules d'eau.
